(19) **Europäisches Patentamt European Patent Office Office européen des brevets**

(11) **EP 4 428 177 A1**

(12) **EUROPEAN PATENT APPLICATION**
published in accordance with Art. 153(4) EPC

(43) Date of publication:
**11.09.2024 Bulletin 2024/37**

(21) Application number: **22889929.0**

(22) Date of filing: **31.10.2022**

(51) International Patent Classification (IPC):
*C08G 69/40* (2006.01)     *C08L 77/00* (2006.01)
*C08L 101/00* (2006.01)     *C08J 9/04* (2006.01)
*C08K 3/011* (2018.01)     *A43B 13/04* (2006.01)
*A43B 17/14* (2006.01)

(52) Cooperative Patent Classification (CPC):
**A43B 13/04; A43B 17/14; C08G 69/40; C08J 9/04; C08K 3/011; C08L 77/00; C08L 101/00**

(86) International application number:
**PCT/JP2022/040685**

(87) International publication number:
**WO 2023/080109 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 JP 2021180776**
**31.05.2022 JP 2022088271**

(71) Applicant: **Sanyo Chemical Industries, Ltd. Kyoto-shi, Kyoto 605-0995 (JP)**

(72) Inventors:
• **TOKUNAGA, Hironobu**
  **Kyoto-shi, Kyoto 605-0995 (JP)**
• **HATTORI, Masanori**
  **Kyoto-shi, Kyoto 605-0995 (JP)**
• **TANAKA, Yuhei**
  **Kyoto-shi, Kyoto 605-0995 (JP)**

(74) Representative: **Mewburn Ellis LLP Aurora Building Counterslip Bristol BS1 6BX (GB)**

(54) **SHOE SOLE BLOCK POLYMER, SHOE SOLE RESIN COMPOSITION, AND SHOE SOLE**

(57)     An object of the present invention is to provide a shoe sole exhibiting small compressive strain. The present invention relates to a block polymer (X) for a shoe sole, containing as constituent units: a block of polyamide (am); and a block of polyalkylene glycol (b) containing C3-C4 alkylene glycol as a constituent monomer, the block polymer (X) for a shoe sole having a crosslinked structure in which a crosslinking agent (K) and the block of polyalkylene glycol (b) are bonded to each other.

**EP 4 428 177 A1**

**Description**

TECHNICAL FIELD

The present invention relates to a block polymer for a shoe sole, a resin composition for a shoe sole, and a shoe sole.

BACKGROUND ART

EVA resin (ethylene vinyl acetate resin) is generally used as a resin for a shoe sole. For example, soles for sports shoes formed of multiple members fabricated using EVA resin have been proposed (for example, Patent Literature 1).

CITATION LIST

- Patent Literature

Patent Literature 1: JP 2008-093412 A

SUMMARY OF INVENTION

- Technical Problem

Soles fabricated using EVA resin are inexpensive, but are thus inferior in durability due to a large compressive strain, and also inferior in resilience, so it is required to solve these problems.
An object of the present invention is to provide a shoe sole exhibiting small compressive strain.

- Solution to Problem

The present inventors have conducted extensive studies to solve the problems, and as a result, have achieved the present invention. Specifically, the present invention relates to a block polymer (X) for a shoe sole, containing as constituent units: a block of polyamide (am); and a block of polyalkylene glycol (b) containing C3-C4 alkylene glycol as a constituent monomer, the block polymer (X) for a shoe sole having a crosslinked structure in which a crosslinking agent (K) and the block of polyalkylene glycol (b) are bonded to each other. The present invention also relates to a resin composition (Y) for a shoe sole, containing: the block polymer (X) for a shoe sole; and a thermoplastic resin (E) other than the block polymer (X) for a shoe sole. The present invention also relates to a shoe sole (Z) that is a molded foam of the block polymer (X) for a shoe sole or a molded foam of the resin composition (Y) for a shoe sole.

- Advantageous Effects of Invention

The shoe sole (Z) fabricated using the block polymer (X) for a shoe sole or the resin composition (Y) for a shoe sole of the present invention exerts an effect of exhibiting small compressive strain, excellent durability, and excellent resilience.

DESCRIPTION OF EMBODIMENTS

<Polyamide (am)>

Examples of a polyamide (am) in the present invention include a polyamide (am1) containing a dicarboxylic acid or an amide-forming derivative thereof and a diamine as essential constituent monomers, a polyamide (am2) prepared by ring-opening polymerization of a lactam with a dicarboxylic acid or a monocarboxylic acid, a polyamide (am3) prepared by ring-opening polymerization of a lactam with water, a diamine, or a monoamine, a polyamide (am4) prepared by polycondensation of an aminocarboxylic acid, and a polyamide (am5) prepared by one-shot synthesis of two or more of the polyamide (am1) to (am4).
The block of polyamide (am) in the present invention contains at least one of these polyamides (am).
Examples of the dicarboxylic acid used for the polyamides (am1) and (am2) include C2-C20 dicarboxylic acids such as C2-C20 aliphatic dicarboxylic acids (e.g., succinic acid, glutaric acid, adipic acid, pimelic acid, suberic acid, azelaic acid, sebacic acid, undecanedioic acid, dodecanedioic acid, maleic acid, fumaric acid, and itaconic acid); C8-C20 aromatic dicarboxylic acids (e.g., terephthalic acid, phthalic acid, 2,6- or 2,7-naphthalenedicarboxylic acid, diphenyl-4,4'-dicarboxylic acid, diphenoxyethanedicarboxylic acid, tolylene dicarboxylic acid, xylylene dicarboxylic acid, and 5-sulfoisophthalic acid); and C5-C20 alicyclic dicarboxylic acids (e.g., cyclopropanedicarboxylic acid, 1,4-cyclohexanedicarboxylic acid, cyclohexenedicarboxylic acid, bicyclohexyl-4,4'-dicarboxylic acid, and camphoric acid).

Examples of the amide-forming derivative of a dicarboxylic acid include alkyl (C1-C4 alkyl) esters (e.g., a methyl ester and an ethyl ester) of the above-described dicarboxylic acids and acid anhydrides of the above-described dicarboxylic acids.

One of the dicarboxylic acids and amide-forming derivatives thereof may be used alone or two or more of these may be used in combination.

Of the dicarboxylic acids and amide-forming derivatives thereof used for the polyamide (am1), from the viewpoint of compressive strain and resilience, C2-C20 aliphatic dicarboxylic acids, C8-C20 aromatic dicarboxylic acids, and amide-forming derivatives thereof are preferable, C2-C20 aliphatic dicarboxylic acids and amide-forming derivatives thereof are more preferable, C6-C12 aliphatic dicarboxylic acids and amide-forming derivatives thereof are still more preferable, adipic acid, undecanedioic acid, dodecanedioic acid, and amide-forming derivatives thereof are particularly preferable, and adipic acid and an amide-forming derivative thereof are most preferable.

Of the dicarboxylic acids and amide-forming derivatives thereof used for the polyamide (am2), from the viewpoint of compressive strain and resilience, C2-C20 aliphatic dicarboxylic acids and C8-C20 aromatic dicarboxylic acids are preferable, C8-C20 aromatic dicarboxylic acids (e.g., terephthalic acid, phthalic acid, 2,6- or 2,7-naphthalenedicarboxylic acid, diphenyl-4,4'-dicarboxylic acid, diphenoxyethanedicarboxylic acid, tolylene dicarboxylic acid, xylylene dicarboxylic acid, and 5-sulfoisophthalic acid) are more preferable, and terephthalic acid and 2,6- or 2,7-naphthalene dicarboxylic acid are particularly preferable.

Examples of the diamine used for the polyamides (am1) and (am3) include C2-C12 diamines such as C2-C12 aliphatic diamines (e.g., ethylenediamine, hexamethylenediamine, heptamethylenediamine, octamethylenediamine, and decamethylenediamine).

Of these, a C6 aliphatic diamine and a C10 aliphatic diamine are preferable, 1,6-diaminohexane and 1,10-diaminodecane are more preferable, and 1,6-diaminohexane is particularly preferable.

One of the diamines may be used alone or two or more of these may be used in combination.

Examples of the monocarboxylic acid used for the polyamide (am2) include C1-C20 monocarboxylic acids (e.g., capric acid, lauric acid, myristic acid, benzoic acid, t-butylbenzoic acid, and 2-naphthalenecarboxylic acid).

Examples of the monoamine used for the polyamide (am3) include C1-C20 monoamines (e.g., methylamine, ethylamine, propylamine, hexylamine, octylamine, decylamine, and dodecylamine).

From the viewpoint of ease of synthesis and dimensional stability, the lactam used for the polyamides (am2) and (am3) is preferably ε-caprolactam, 11-undecanolactam, or 12-laurolactam, still more preferably ε-caprolactam or 12-laurolactam.

Examples of the aminocarboxylic acid used for the polyamide (am4) include C2-C12 (preferably C4-C12, more preferably C6-C12) aminocarboxylic acids. Specific examples thereof include amino acids (e.g., glycine, alanine, valine, leucine, isoleucine, and phenylalanine), ω-aminocaproic acid, ω-aminoenanthic acid, ω-aminocaprylic acid, ω-aminopelargonic acid, ω-aminocapric acid, 11-aminoundecanoic acid, and 12-aminododecanoic acid.

Of these aminocarboxylic acids, from the viewpoint of compressive strain and resilience, glycine, leucine, 8-aminocaprylic acid, 11-aminoundecanoic acid, and 12-aminododecanoic acid are preferable, 8-aminocaprylic acid, 11-aminoundecanoic acid, and 12-aminododecanoic acid are more preferable, 11-aminoundecanoic acid and 12-aminododecanoic acid are particularly preferable, and 12-aminododecanoic acid is most preferable.

The carboxy group content of the block of polyamide (am) is expressed as an acid value (unit: mgKOH/g), and the amino group content of the polyamide (am) is expressed as an amine value (unit: mgKOH/g).

The acid value in the present invention is measured through titration using a KOH/methanol solution containing phenolphthalein as an indicator. The acid value is measured as the half-esterification acid value after half-esterification with methanol when the acid group is a carboxylic anhydride group.

From the viewpoint of ease of synthesis of block polymers, the polyamide (am) preferably contains a carboxy group. From the viewpoint of compressive strain and resilience, the acid value of the polyamide (am) containing a carboxy group is preferably 20 to 220 mgKOH/g, more preferably 25 to 150 mgKOH/g, particularly preferably 30 to 120 mgKOH/g.

From the viewpoint of compressive strain and resilience, the polyamide (am) is preferably a polyamide containing as an essential constituent monomer at least one selected from the group consisting of 1,6-diaminohexane, 1,10-diaminodecane, ε-caprolactam, 11-undecanolactam, 12-laurolactam, 11-aminoundecanoic acid, and 12-aminododecanoic acid.

From the viewpoint of compressive strain and resilience, the number average molecular weight (hereinafter abbreviated as Mn) of the polyamide (am) is preferably 500 to 5,000, more preferably 750 to 4,000, particularly preferably 1,000 to 4,000.

The number average molecular weight (Mn) of the polymer in the present invention can be measured by gel permeation chromatography (GPC) under the following conditions.

- Instrument: "HLC-8120" [manufactured by Tosoh Corporation]
- Columns: "TSKgel GMHXL" [manufactured by Tosoh Corporation] (2 columns) and "TSKgel MultiporeHXL-M" [manufactured by Tosoh Corporation] (1 column)
- Sample solution: 0.3% by weight orthodichlorobenzene solution
- Injected solution volume: 100 µl
- Flow rate: 1 ml/min
- Measurement temperature: 135°C
- Detection instrument: refractive index detector
- Reference substance: 12 standard polystyrenes (TSK standard POLYSTYRENE) (molecular weight: 500, 1,050, 2,800, 5,970, 9,100, 18,100, 37,900, 96,400, 190,000, 355,000, 1,090,000, and 2,890,000) [manufactured by Tosoh Corporation]

Common methods for producing polyamides can be directly applied to a method of producing the polyamide (am). Polyamidation reactions may be performed, for example, in the temperature range of 150°C to 300°C under reduced pressure. The reaction time is preferably 0.5 to 20 hours. Catalysts commonly used in polyamidation reactions may also be used if necessary.

<Polyalkylene glycol (b)>

The polyalkylene glycol (b) in the present invention contains a C3-C4 alkylene glycol as a constituent monomer. The alkylene glycol preferably has 4 carbon atoms.
Examples of the polyalkylene glycol (b) include polytetramethylene glycol, polypropylene glycol, and terminal-modified products (amino group modified products, glycidyl etherified products) thereof.
The block of polyalkylene glycol (b) in the present invention contains at least one of these polyalkylene glycols (b).
Of these, from the viewpoint of productivity of the block polymer, those having a hydroxy group or an amino group at least at one end of the polymer main chain are preferable.
The polyalkylene glycol (b) is obtained by a known production method (polymerization of tetrahydrofuran or propylene oxide in the presence of a catalyst). Modified products thereof are also obtained by known production methods. The polyalkylene glycol (b) may be obtained by the above method or a commercially available product may be used.
The Mn of the polyalkylene glycol (b) is preferably 500 to 4,000, more preferably 750 to 3,000, particularly preferably 1,000 to 3,000 from the viewpoint of compressive strain and resilience.

<Block polymer (X) for shoe sole>

A block polymer (X) for a shoe sole of the present invention (hereinafter sometimes abbreviated as block polymer (X)) contains as constituent units the block of polyamide (am) above and the block of polyalkylene glycol (b) above.
The Mn of the block of polyamide (am) is preferably 500 to 5,000, more preferably 750 to 4,000, particularly preferably 1,000 to 4,000 from the viewpoint of compressive strain and resilience.
The Mn of the block of polyalkylene glycol (b) is preferably 500 to 4,000, more preferably 750 to 3,000, particularly preferably 1,000 to 3,000 from the viewpoint of compressive strain and resilience.
The structure in which the block of polyamide (am) and the block of polyalkylene glycol (b) constituting the block polymer (X) are bonded to each other includes an (a)-(b) type, an (a)-(b)-(a) type, a (b)-(a)-(b) type, and an [(a)-(b)]n type (n represents the average number of repetitions).
The block polymer (X) can be produced, for example, by reacting the polyamide (am) with the polyalkylene glycol (b) .
In a case where the block polymer (X) has a structure in which the block of polyamide (am) and the block of polyalkylene glycol (b) are bonded to each other by an amide bond, an imide bond, or an ester bond, the block polymer (X) can be produced by, for example, placing the polyamide (am) and the polyalkylene glycol (b) in a reaction vessel and conducting the amidation reaction, imidization reaction, or esterification reaction thereof for 1 to 50 hours under stirring at a reaction temperature of 100°C to 250°C and a pressure of 0.1 MPa or less while removing water generated by the reaction from the reaction system.
The block polymer (X) further contains a crosslinking agent (K), which is described below, as a constituent unit. The block polymer (X) has a crosslinked structure in which the crosslinking agent (K) and the block of polyalkylene glycol (b) are bonded to each other. In the block polymer (X), the crosslinking agent (K) and the block of polyalkylene glycol (b) are preferably bonded via three or more bonds, more preferably bonded via three or more bonds selected from the group consisting of an ester bond and an amide bond.

The weight ratio of the block of polyamide (am) to the block of polyalkylene glycol (b) constituting the block polymer (X) [(am)/(b)] is preferably within a range of 15/85 to 90/10, more preferably 20/80 to 80/20, particularly preferably 30/70 to 80/20 from the viewpoint of compressive strain, resilience, and hardness.

Mn of the block polymer (X) is preferably 10,000 to 150,000, more preferably 10,000 to 100,000, particularly preferably 20,000 to 80,000.

The block polymer (X) for a shoe sole of the present invention can be suitably used as a raw material resin for various shoe soles (outsoles, midsoles).

<Crosslinking agent (K)>

The crosslinking agent (K) in the present invention is a compound capable of crosslinking the polyalkylene glycol (b), and is preferably a compound including at least three functional groups capable of reacting with the functional group at the end of the polyalkylene glycol (b).

As the crosslinking agent (K), a compound including at least three functional groups (for example, a carboxy group, an amino group, an epoxy group, and a hydroxy group) capable of reacting with a hydroxy group and/or an amino group is preferable. Of these functional groups, a carboxy group is preferable from the viewpoint of reactivity with the polyalkylene glycol (b).

The crosslinking agent (K) is not limited as long as it is reactive with the polyalkylene glycol (b), and examples include a trivalent or higher polycarboxylic acid (K1), a trivalent or higher polyepoxide (K2), a trivalent or higher polyamine (K3), and a trivalent or higher polyol (K4) .

Examples of the trivalent or higher polycarboxylic acid (K1) include trimesic acid, trimellitic acid, pyromellitic acid, hexanetricarboxylic acid, decanetricarboxylic acid, and acid anhydrides thereof and alkyl (C1-C2 alkyl) esters thereof.

Examples of the trivalent or higher polyepoxide (K2) include triglycidyl ether of trimethylolpropane.

Examples of the trivalent or higher polyamine (K3) include triethylenetetramine.

Examples of the trivalent or higher polyol (K4) include triethanolamine.

Of the crosslinking agents (K), a trivalent or higher polycarboxylic acid (K1) is preferable, a trivalent or higher aromatic polycarboxylic acid is more preferable, trimellitic acid, an acid anhydride thereof, and alkyl (C1-C2 alkyl) esters are particularly preferable.

When a crosslinked structure is introduced into the block polymer (X), the crosslinking agent (K) may be added at any timing before, during, or after the reaction of the polyamide (am) with the polyalkylene glycol (b).

As the amount of the crosslinking agent (K), from the viewpoint of compressive strain and resilience, the molar ratio of the crosslinking agent (K) to the polyamide (am) [(K)/(am)] is preferably within a range of 3/97 to 35/65, more preferably 5/95 to 20/80.

<Resin composition (Y) for shoe sole>

A resin composition (Y) for a shoe sole of the present invention [hereinafter sometimes abbreviated as resin composition (Y)] contains the block polymer (X) for a shoe sole of the present invention and a thermoplastic resin (E) other than the block polymer (X).

Examples of the thermoplastic resin (E) include a polyolefin resin (E1), a polystyrene resin (E2), an acrylic resin (E3), a polyamide resin (E4), a polyester resin (E5), a polyacetal resin (E6), a polycarbonate resin (E7), and a polyurethane resin (E8).

Of the thermoplastic resins (E), the polyamide resin (E4) is preferable from the viewpoint of compressive strain and resilience.

The Mn of the thermoplastic resin (E) is preferably 7,000 to 500,000, more preferably 10,000 to 200,000.

The weight ratio of the block polymer (X) for a shoe sole to the thermoplastic resin (E) other than the block polymer (X) [(X)/(E)] is preferably within a range of 60/40 to 95/5, more preferably 70/30 to 90/10.

The block polymer (X) for a shoe sole and the resin composition (Y) for a shoe sole may contain additives (D), such as a coloring agent (D1) (such as azo pigment), a mold release agent (D2) (such as liquid paraffin), an antioxidant (D3) (such as triphenyl phosphite), a flame retardant (D4) (such as antimony trioxide), an ultraviolet absorber (D5) (such as phenyl salicylate), an antibacterial agent (D6) (such as benzimidazole), a compatibilizer (D7) (such as modified vinyl copolymer), a filler (D8) (such as calcium carbide), and a transesterification inhibitor (D9) (such as monooctadecyl phosphate), in a range in which the effects of the present invention are not impeded. The additives may each be used singly or in combination of two or more.

The total content of the additives (D) based on the weight of the block polymer (X) for a shoe sole or the resin composition (Y) for a shoe sole is generally 45% by weight or less, is preferably 0.001% to 40% by weight, more preferably 0.01% to 35% by weight from the viewpoint of the effects of the respective additives and the mechanical strength of the molded product; and as the contents of the respective additives (D), from the same point of view, the content of the coloring agent (D1) is preferably 0.1% to 3% by weight, more preferably 0.2% to 2% by weight; the content of the mold release agent (D2) is preferably 0.01% to 3% by weight, more preferably 0.05% to 1% by weight; the content of the antioxidant (D3) is preferably 0.01% to 3% by weight, more preferably 0.05% to 1% by weight; the content of the flame retardant (D4) is preferably 0.5% to 20% by weight, more preferably 1% to 10% by weight; the content of the ultraviolet absorber (D5) is preferably 0.01% to 3% by weight, more preferably 0.05% to 1% by weight; the content of the antibacterial agent (D6) is preferably 0.5% to 20% by weight, more preferably 1% to 100 by weight; the content of the compatibilizer (D7) is preferably 0.5% to 10% by weight, more preferably 1% to 5% by weight; the content of the filler (D8) is preferably 0.5% to 10% by weight, more preferably 1% to 5% by weight; and the content of the transesterification inhibitor (D9) is preferably 0.01% to 3% by weight, more preferably 0.05% to 1% by weight.

<Shoe sole (Z)>

A shoe sole (Z) of the present invention is a molded foam of the block polymer (X) for a shoe sole or a molded foam of the resin composition (Y) for a shoe sole.

The density of the shoe sole (Z) is preferably 0.20 to 0.90 $g/cm^3$, more preferably 0.30 to 0.80 $g/cm^3$.

In the present invention, the density is a value measured at 23°C in conformity with ASTM D1505.

The shoe sole (Z) of the present invention can be fabricated by, for example, mixing the block polymer (X) for a shoe sole or the resin composition (Y) for a shoe sole using an open roll and then foam-molding the mixture. After foam molding, further processing may be performed, if necessary.

The molding temperature during foam molding is, for example, 150°C to 220°C.

A blowing agent (C) may be used at the time of foam molding.

Examples of the blowing agent (C) include azodicarbonamide (ADCA), azobisisobutyronitrile (AIBN), and dinitrosopentamethylenetetramine (DPT).

The weight ratio of the block polymer (X) to the blowing agent (C) [(X)/(C)] and the weight ratio of the resin composition (Y) to the blowing agent (C) [(Y)/(C)] vary depending on the desired density, but both are preferably within a range of 90/10 to 99/1, more preferably 93/7 to 99/2.

The block polymer (X) for a shoe sole of the present invention can be suitably used as a raw material resin for various shoe soles (outsoles, midsoles). The shoe sole (Z) fabricated using the block polymer (X) for a shoe sole exhibits small compressive strain, excellent durability, and excellent resilience (a low loss coefficient, a small change in resilience depending on the temperature), and is thus useful as a midsole or an outsole.

The following items are disclosed in this specification.

(1) A block polymer (X) for a shoe sole, containing as constituent units:

a block of polyamide (am); and
a block of polyalkylene glycol (b) containing C3-C4 alkylene glycol as a constituent monomer,
the block polymer (X) for a shoe sole having a crosslinked structure in which a crosslinking agent (K) and the block of polyalkylene glycol (b) are bonded to each other.

(2) The block polymer (X) for a shoe sole according to (1),
wherein the block of polyamide (am) has a number average molecular weight of 500 to 5,000.
(3) The block polymer (X) for a shoe sole according to (1) or (2),
wherein the block of polyalkylene glycol (b) has a number average molecular weight of 500 to 4,000.
(4) The block polymer (X) for a shoe sole according to any one of (1) to (3),
wherein a weight ratio of the block of polyamide (am) to the block of polyalkylene glycol (b) [(am)/(b)] is within a range of 15/85 to 90/10.
(5) The block polymer (X) for a shoe sole according to any one of (1) to (4),
wherein the crosslinking agent (K) and the block of polyalkylene glycol (b) are bonded to each other via three or more bonds selected from the group consisting of an ester bond and an amide bond.
(6) The block polymer (X) for a shoe sole according to any one of (1) to (5),
wherein the block polymer (X) for a shoe sole has a number average molecular weight of 10,000 to 150,000.
(7) A resin composition (Y) for a shoe sole, containing:

the block polymer (X) for a shoe sole according to any one of (1) to (6); and
a thermoplastic resin (E) other than the block polymer (X) for a shoe sole.

(8) A shoe sole (Z) that is a molded foam of the block polymer (X) for a shoe sole according to any one of (1) to (6) or a molded foam of the resin composition (Y) for a shoe sole according to (7).
(9) The shoe sole (Z) according to (8),
wherein the shoe sole (Z) has a density of 0.20 to 0.90 g/cm$^3$.

EXAMPLES

Hereinafter, the present invention will be further explained with reference to Examples and Comparative Examples, but the present invention is not limited thereto. Hereinafter, % refers to % by weight and part(s) refer to part(s) by weight unless otherwise specified.

<Production Example 1>

[Production of polyamide (am-1)]

A pressure resistant reaction vessel was charged with 82.5 parts of 12-laurolactam, 16.3 parts of terephthalic acid, 0.3 parts of an antioxidant (trade name "Irganox 1010", available from BASF Japan Ltd.), and 10 parts of water. The vessel was purged with nitrogen and sealed. The temperature was raised to 220°C with stirring, followed by stirring at 220°C under a pressure of 0.2 to 0.3 MPa for four hours. Thereby, a polyamide (am-1) having a carboxy group at each end was obtained.
The polyamide (am-1) had an acid value of 109 and Mn of 1,000.

<Production Example 2>

[Production of polyamide (am-2)]

The same pressure resistant reaction vessel as that in Production Example 1 was charged with 89.9 parts of 12-laurolactam, 8.9 parts of terephthalic acid, 0.3 parts of an antioxidant ("Irganox 1010" described above), and 10 parts of water. The vessel was purged with nitrogen and sealed. The temperature was raised to 220°C with stirring, followed by stirring at 220°C under a pressure of 0.2 to 0.3 MPa for four hours. Thereby, a polyamide (am-2) having a carboxy group at each end was obtained.
The polyamide (am-2) had an acid value of 54.5 and Mn of 2,000.

<Production Example 3>

[Production of polyamide (am-3)]

The same pressure resistant reaction vessel as that in Production Example 1 was charged with 95.9 parts of 12-laurolactam, 4.1 parts of terephthalic acid, 0.3 parts of an antioxidant ("Irganox 1010" described above), and 10 parts of water. The vessel was purged with nitrogen and sealed. The temperature was raised to 220°C with stirring, followed by stirring at 220°C under a pressure of 0.2 to 0.3 MPa for four hours. Thereby, a polyamide (am-3) having a carboxy group at each end was obtained.
The polyamide (am-3) had an acid value of 27.4 and Mn of 4,100.

<Example 1>

A reaction vessel equipped with a stirrer, a thermometer, and a heating and cooling machine was charged with 92 parts of the polyamide (am-1), 205 parts of polytetramethylene glycol (b-1) (PTMG, Mn: 2,000), 1.9 parts of trimellitic anhydride, and 0.6 parts of zirconium acetate. The temperature was raised to 240°C with stirring, and polymerization was carried out at the same temperature under reduced pressure of 0.13 kPa or less for six hours. Thereby, a block polymer (X-1) for a shoe sole (Mn: 43,000) was obtained.

<Example 2>

A reaction vessel equipped with a stirrer, a thermometer, and a heating and cooling machine was charged with 71 parts of the polyamide (am-1), 229 parts of the polytetramethylene glycol (b-1), 5.7 parts of trimellitic anhydride, and 0.6 parts of zirconium acetate. The temperature was raised to 240°C with stirring, and polymerization was carried out at the same temperature under reduced pressure of 0.13 kPa or less for six hours. Thereby, a block polymer (X-2) for a shoe sole (Mn: 60,000) was obtained.

<Example 3>

A reaction vessel equipped with a stirrer, a thermometer, and a heating and cooling machine was charged with 190 parts of the polyamide (am-2), 107 parts of polytetramethylene glycol (b-2) (PTMG, Mn: 1,000), 2.0 parts of trimellitic anhydride, and 0.6 parts of zirconium acetate. The temperature was raised to 240°C with stirring, and polymerization was carried out at the same temperature under reduced pressure of 0.13 kPa or less for six hours. Thereby, a block polymer (X-3) for a shoe sole (Mn: 52,000) was obtained.

<Example 4>

A reaction vessel equipped with a stirrer, a thermometer, and a heating and cooling machine was charged with 177 parts of the polyamide (am-2), 118 parts of the polytetramethylene glycol (b-2), 4.1 parts of trimellitic anhydride, and 0.6 parts of zirconium acetate. The temperature was raised to 240°C with stirring, and polymerization was carried out at the same temperature under reduced pressure of 0.13 kPa or less for six hours. Thereby, a block polymer (X-4) for a shoe sole (Mn: 58,000) was obtained.

<Example 5>

A reaction vessel equipped with a stirrer, a thermometer, and a heating and cooling machine was charged with 163 parts of the polyamide (am-2), 118 parts of the polytetramethylene glycol (b-2), 6.3 parts of trimellitic anhydride, and 0.6 parts of zirconium acetate. The temperature was raised to 240°C with stirring, and polymerization was carried out at the same temperature under reduced pressure of 0.13 kPa or less for six hours. Thereby, a block polymer (X-5) for a shoe sole (Mn: 65,000) was obtained.

<Example 6>

A reaction vessel equipped with a stirrer, a thermometer, and a heating and cooling machine was charged with 191 parts of the polyamide (am-3), 130 parts of the polytetramethylene glycol (b-1), 1.0 parts of trimellitic anhydride, and 0.6 parts of zirconium acetate. The temperature was raised to 240°C with stirring, and polymerization was carried out at the same temperature under reduced pressure of 0.13 kPa or less for six hours. Thereby, a block polymer (X-6) for a shoe sole (Mn: 57,000) was obtained.

<Example 7>

A reaction vessel equipped with a stirrer, a thermometer, and a heating and cooling machine was charged with 233 parts of the polyamide (am-3), 66 parts of the polytetramethylene glycol (b-2), 1.2 parts of trimellitic anhydride, and 0.6 parts of zirconium acetate. The temperature was raised to 240°C with stirring, and polymerization was carried out at the same temperature under reduced pressure of 0.13 kPa or less for six hours. Thereby, a block polymer (X-7) for a shoe sole (Mn: 54,000) was obtained.

<Example 8>

A reaction vessel equipped with a stirrer, a thermometer, and a heating and cooling machine was charged with 92 parts of the polyamide (am-1), 205 parts of polypropylene glycol (b-3) (PPG, Mn: 2,000), 1.9 parts of trimellitic anhydride, and 0.6 parts of zirconium acetate. The temperature was raised to 240°C with stirring, and polymerization was carried out at the same temperature under reduced pressure of 0.13 kPa or less for six hours. Thereby, a block polymer (X-8) for a shoe sole (Mn: 42,000) was obtained.

<Example 9>

A reaction vessel equipped with a stirrer, a thermometer, and a heating and cooling machine was charged with 190 parts of the polyamide (am-2), 108 parts of polypropylene glycol (b-4) (PPG, Mn: 1,000), 2.0 parts of trimellitic anhydride, and 0.6 parts of zirconium acetate. The temperature was raised to 240°C with stirring, and polymerization was carried out at the same temperature under reduced pressure of 0.13 kPa or less for six hours. Thereby, a block polymer (X-9) for a shoe sole (Mn: 50,000) was obtained.

<Example 10>

A reaction vessel equipped with a stirrer, a thermometer, and a heating and cooling machine was charged with 139 parts of the polyamide (am-2), 159 parts of the polytetramethylene glycol (b-1) (Mn: 2,000), 1.6 parts of trimesic acid, and 0.6 parts of zirconium acetate. The temperature was raised to 240°C with stirring, and polymerization was carried out at the same temperature under reduced pressure of 0.13 kPa or less for six hours. Thereby, a block polymer (X-10) for a shoe sole (Mn: 53,000) was obtained.

<Example 11>

A reaction vessel equipped with a stirrer, a thermometer, and a heating and cooling machine was charged with 139 parts of the polyamide (am-2), 159 parts of polypropylene glycol diamine (b-5), 1.6 parts of trimesic acid, and 0.6 parts of zirconium acetate. The temperature was raised to 240°C with stirring, and polymerization was carried out at the same temperature under reduced pressure of 0.13 kPa or less for six hours. Thereby, a block polymer (X-11) for a shoe sole (Mn: 62,000) was obtained.

<Example 12>

Seventy parts of the block polymer (X-3) for a shoe sole obtained in Example 3 and 30 parts of polyamide resin (E-1) [6-nylon resin, trade name "UBE Nylon 1013B", manufactured by UBE Corporation, Mn 13,000] were kneaded by a twin-screw extruder at 240°C and a residence time of 30 seconds and pelletized. Thereby, a resin composition (Y-12) for a shoe sole was obtained.

<Example 13>

Ninety parts of the block polymer (X-3) for a shoe sole obtained in Example 3 and 10 parts of polyamide resin (E-2) [12-nylon resin, trade name "UBE Nylon 3014U", manufactured by UBE Corporation, Mn 14,000] were kneaded by a twin-screw extruder at 200°C and a residence time of 30 seconds and pelletized. Thereby, a resin composition (Y-13) for a shoe sole was obtained.

<Example 14>

Seventy parts of the block polymer (X-3) for a shoe sole obtained in Example 3 and 30 parts of the polyamide resin (E-2) [UBE Nylon 3014U described above] were kneaded by a twin-screw extruder at 200°C and a residence time of 30 seconds and pelletized. Thereby, a resin composition (Y-14) for a shoe sole was obtained.

<Example 15>

Ninety parts of the block polymer (X-5) for a shoe sole obtained in Example 5 and 10 parts of the polyamide resin (E-2) [UBE Nylon 3014U described above] were kneaded by a twin-screw extruder at 200°C and a residence time of 30 seconds and pelletized. Thereby, a resin composition (Y-15) for a shoe sole was obtained.

<Example 16>

Seventy parts of the block polymer for a shoe sole (X-5) obtained in Example 5 and 30 parts of the polyamide resin (E-2) [UBE Nylon 3014U described above] were kneaded by a twin-screw extruder at 200°C and a residence time of 30 seconds and pelletized. Thereby, a resin composition (Y-16) for a shoe sole was obtained.

<Comparative Example 1>

A reaction vessel equipped with a stirrer, a thermometer, and a heating and cooling machine was charged with 202 parts of the polyamide (am-2), 98 parts of polytetramethylene glycol (b-2), and 0.6 parts of zirconium acetate. The temperature was raised to 240°C with stirring, and polymerization was carried out at the same temperature under reduced pressure of 0.13 kPa or less for six hours. Thereby, a block polymer (Comparative X-1) for a shoe sole (Mn: 40,000) was obtained.

<Comparative Example 2>

A reaction vessel equipped with a stirrer, a thermometer, and a heating and cooling machine was charged with 206 parts of the polyamide (am-2), 93 parts of the polytetramethylene glycol (b-2), 1.0 parts of glycerol, and 0.6 parts of zirconium acetate. The temperature was raised to 240°C with stirring, and polymerization was carried out at the same temperature under reduced pressure of 0.13 kPa or less for six hours. Thereby, a block polymer (Comparative X-2) for a shoe sole (Mn: 45,000) was obtained.

<Comparative Example 3>

A commercially available EVA resin (manufactured by Mitsui Chemicals, Inc., trade name "EVAFLEX 270") was used as a block polymer for comparison.

<Example 17>

After 100 parts of the block polymer (X-1) for a shoe sole and 4 parts of a blowing agent (C-1) were mixed using an open roll, foam molding was performed at 200°C and 15 MPa to obtain a shoe sole (Z-1). Evaluation was performed on the obtained shoe sole (Z-1).

<Examples 18 to 32 and Comparative Examples 4 to 6>

The respective shoe soles (Z) were obtained as in Example 17 except that the raw material compositions (parts) in Table 1 were adopted. The results are shown in Table 1.
<Evaluation>

(1) Density

The density (g/cm$^3$) was determined at 23°C in conformity with ASTM D1505.

(2) Compressive strain

The test was conducted five times in total, with one test in which a load of 10 kgf/cm$^2$ was applied to the obtained sole (5 cm long × 5 cm wide × 5 cm high) at 50°C for 20 hours and removed for 4 hours. The height before the test was denoted as L0, the height after the test was denoted as L5, and the compressive strain was calculated by the following equation and evaluated according to the following evaluation criteria.

$$\texttt{Compressive strain (\%) = (L0 - L5) × 100/L0}$$

<Evaluation criteria>

Excellent: Compressive strain of less than 100
Favorable: Compressive strain of 100 or more and less than 150
Acceptable: Compressive strain of 150 or more and less than 20%
Poor: Compressive strain of 20% or more

(3) Resilience

A sample was taken from the obtained sole, the dynamic viscoelasticity was measured under the following measurement conditions in conformity with JIS K 7244-4, and the loss coefficient (tan δ) at 23°C was determined and evaluated according to the following evaluation criteria.

(Measurement conditions)

Measurement instrument: Dynamic viscoelasticity measuring apparatus Rheogel-E4000 manufactured by UBM Co., Ltd. Sample shape: $40\pm3$ mm long, $5\pm0.3$ mm wide, $3\pm0.3$ mm thick strip
Measurement mode: Tensile mode with sinusoidal wave strain Distance between chucks: $30\pm0.2$ mm
Temperature: -50°C to 200°C
Frequency: 10 Hz
Load: Automatic static load
Dynamic strain: 3 um

<Evaluation criteria>

Excellent: less than 0.06
Favorable: 0.06 or more and less than 0.1
Acceptable: 0.1 or more and less than 0.15
Poor: 0.15 or more

(4) Change in resilience depending on temperature (-20°C[tan$\delta$]/25°C[tan$\delta$])

The loss coefficient at -20°C (-20°C[tan$\delta$]) and the loss coefficient at 25°C (25°C[tan$\delta$]) were calculated from the measurement data of dynamic viscoelasticity as in (3) above, and -20°C[tan$\delta$]/25°C[tan$\delta$] was evaluated according to the following evaluation criteria.

<Evaluation criteria>

Excellent: 0.75 or more and less than 1.25
Favorable: 0.6 or more and less than 0.75, or 1.25 or more and less than 1.4
Acceptable: 0.4 or more and less than 0.6, or 1.4 or more and less than 1.6
Poor: less than 0.4 or 1.6 or more

(5) Temperature dependence of sole repulsion

The obtained sole was cut into pieces (25 cm long $\times$ 10 cm wide $\times$ 3 cm thick) to obtain a test piece. The test piece was placed in a room at 20°C and 50% RH (relative humidity), and the temperature was controlled for 24 hours.
An aluminum sphere having a diameter of 2 cm was dropped from a height of 50 cm from the top of the test piece, the distance from the test piece to the bottom of the aluminum sphere at the time of maximum repulsion was measured, and the repulsion distance was denoted as $L_{20}$.
The test piece was placed in a room at -20°C and 500 RH, the temperature was controlled for 24 hours, and then a similar test was conducted, and the repulsion distance was denoted as $L_{-20}$.
The temperature dependence of sole repulsion was calculated from the above-measured $L_{20}$ and $L_{-20}$ by the following equation, and evaluated according to the following evaluation criteria.

Temperature dependence of sole repulsion = $L_{-20} \times 100/L_{20}$

<Evaluation criteria>

Excellent: 90 or more
Favorable: 80 or more and less than 90
Acceptable: 70 or more and less than 80
Poor: less than 70

[Table 1]

EP 4 428 177 A1

12

| | | | Example | | | | | | | | | | | | | | | | Comparative Example | | |
|---|---|---|---|---|---|---|---|---|---|---|---|---|---|---|---|---|---|---|---|---|---|---|
| | | | 17 | 18 | 19 | 20 | 21 | 22 | 23 | 24 | 25 | 26 | 27 | 28 | 29 | 30 | 31 | 32 | 4 | 5 | 6 |
| | Shoe sole | | Z-1 | Z-2 | Z-3 | Z-4 | Z-5 | Z-6 | Z-7 | Z-8 | Z-9 | Z-10 | Z-11 | Z-12 | Z-13 | Z-14 | Z-15 | Z-16 | Comparative Z-1 | Comparative Z-2 | Comparative Z-3 |
| Raw material composition (parts) | Block polymer for shoe sole | (X-1) | 100 | – | – | – | – | – | – | – | – | – | – | – | – | – | – | – | – | – | – |
| | | (X-2) | – | 100 | – | – | – | – | – | – | – | – | – | – | – | – | – | – | – | – | – |
| | | (X-3) | – | – | 100 | – | – | – | – | – | – | – | – | – | – | – | – | – | – | – | – |
| | | (X-4) | – | – | – | 100 | – | – | – | – | – | – | – | – | – | – | – | – | – | – | – |
| | | (X-5) | – | – | – | – | 100 | – | – | – | – | – | – | – | – | – | – | – | – | – | – |
| | | (X-6) | – | – | – | – | – | 100 | – | – | – | – | – | – | – | – | – | – | – | – | – |
| | | (X-7) | – | – | – | – | – | – | 100 | – | – | – | – | – | – | – | – | – | – | – | – |
| | | (X-8) | – | – | – | – | – | – | – | 100 | – | – | – | – | – | – | – | – | – | – | – |
| | | (X-9) | – | – | – | – | – | – | – | – | 100 | – | – | – | – | – | – | – | – | – | – |
| | | (X-10) | – | – | – | – | – | – | – | – | – | 100 | – | – | – | – | – | – | – | – | – |
| | | (X-11) | – | – | – | – | – | – | – | – | – | – | 100 | – | – | – | – | – | – | – | – |
| | | (Comparative X-1) | – | – | – | – | – | – | – | – | – | – | – | – | – | – | – | – | 100 | – | – |
| | | (Comparative X-2) | – | – | – | – | – | – | – | – | – | – | – | – | – | – | – | – | – | 100 | – |
| | Resin composition for shoe sole | (Y-12) | – | – | – | – | – | – | – | – | – | – | – | 100 | – | – | – | – | – | – | – |
| | | (Y-13) | – | – | – | – | – | – | – | – | – | – | – | – | 100 | – | – | – | – | – | – |
| | | (Y-14) | – | – | – | – | – | – | – | – | – | – | – | – | – | 100 | – | – | – | – | – |
| | | (Y-15) | – | – | – | – | – | – | – | – | – | – | – | – | – | – | 100 | – | – | – | – |
| | | (Y-16) | – | – | – | – | – | – | – | – | – | – | – | – | – | – | – | 100 | – | – | – |
| | EVA resin | | – | – | – | – | – | – | – | – | – | – | – | – | – | – | – | – | – | – | 100 |
| | Blowing agent | (C-1) | 4 | 4 | 4 | 4 | 4 | 4 | 4 | 4 | 4 | 4 | 4 | 4 | 4 | 4 | 4 | 4 | 4 | 4 | 4 |
| | Crosslinking agent | DCP | – | – | – | – | – | – | – | – | – | – | – | – | – | – | – | – | – | – | 1.0 |
| Evaluation | Density (g/cm³) | | 0.31 | 0.30 | 0.30 | 0.29 | 0.30 | 0.31 | 0.30 | 0.31 | 0.31 | 0.29 | 0.30 | 0.31 | 0.30 | 0.31 | 0.29 | 0.31 | 0.31 | 0.30 | 0.30 |
| | Compressive strain | | Favorable | Excellent | Favorable | Favorable | Excellent | Favorable | Favorable | Favorable | Favorable | Favorable | Favorable | Excellent | Excellent | Excellent | Excellent | Excellent | Favorable | Acceptable | Poor |
| | Resilience [tanδ] | | Excellent | Favorable | Excellent | Excellent | Favorable | Favorable | Favorable | Excellent | Excellent | Excellent | Excellent | Excellent | Excellent | Excellent | Excellent | Excellent | Favorable | Favorable | Acceptable |
| | -20°C[tanδ]/25°C[tanδ] | | Excellent | Excellent | Favorable | Excellent | Excellent | Favorable | Favorable | Favorable | Favorable | Favorable | Excellent | Excellent | Excellent | Favorable | Favorable | Excellent | Acceptable | Favorable | Poor |
| | Temperature dependence of sole repulsion | | Favorable | Excellent | Favorable | Excellent | Excellent | Favorable | Favorable | Favorable | Favorable | Favorable | Favorable | Favorable | Favorable | Favorable | Excellent | Excellent | Acceptable | Favorable | Poor |

In Table 1, the respective raw materials are as follows.

EVA resin: Manufactured by Mitsui Chemicals, Inc., trade name "EVAFLEX 270"
Crosslinking agent: Dicumyl peroxide (DCP) [manufactured by NOF Corporation, trade name "Percmil D"]
Blowing agent (C-1): Azodicarbonamide [manufactured by EIWA CHEMICAL IND. CO., LTD., trade name "Vinyfor DW#6"]

From the results in Table 1, it can be understood that the shoe soles (Z) fabricated using the block polymers (X) for shoe soles of the present invention exhibit small compressive strain, excellent durability, and excellent resilience (a low loss coefficient, a small change in resilience depending on the temperature) compared to those for comparison.

INDUSTRIAL APPLICABILITY

The block polymer (X) for a shoe sole of the present invention can be suitably used as a raw material resin for various shoe soles (outsoles, midsoles). The shoe sole (Z) fabricated using the block polymer (X) for a shoe sole exhibits small compressive strain, excellent durability, and excellent resilience, and is thus useful as a midsole or an outsole.

**Claims**

1. A block polymer (X) for a shoe sole, comprising as constituent units:

    a block of polyamide (am); and
    a block of polyalkylene glycol (b) containing C3-C4 alkylene glycol as a constituent monomer,
    the block polymer (X) for a shoe sole having a crosslinked structure in which a crosslinking agent (K) and the block of polyalkylene glycol (b) are bonded to each other.

2. The block polymer (X) for a shoe sole according to claim 1,
   wherein the block of polyamide (am) has a number average molecular weight of 500 to 5,000.

3. The block polymer (X) for a shoe sole according to claim 1,
   wherein the block of polyalkylene glycol (b) has a number average molecular weight of 500 to 4,000.

4. The block polymer (X) for a shoe sole according to claim 1,
   wherein a weight ratio of the block of polyamide (am) to the block of polyalkylene glycol (b) [(am)/(b)] is within a range of 15/85 to 90/10.

5. The block polymer (X) for a shoe sole according to claim 1,
   wherein the crosslinking agent (K) and the block of polyalkylene glycol (b) are bonded to each other via three or more bonds selected from the group consisting of an ester bond and an amide bond.

6. The block polymer (X) for a shoe sole according to claim 1,
   wherein the block polymer (X) for a shoe sole has a number average molecular weight of 10,000 to 150,000.

7. A resin composition (Y) for a shoe sole, comprising:

    the block polymer (X) for a shoe sole according to any one of claims 1 to 6; and
    a thermoplastic resin (E) other than the block polymer (X) for a shoe sole.

8. A shoe sole (Z) that is a molded foam of the block polymer (X) for a shoe sole according to any one of claims 1 to 6.

9. A shoe sole (Z) that is a molded foam of the resin composition (Y) for a shoe sole according to claim 7.

10. The shoe sole (Z) according to claim 8,
    wherein the shoe sole (Z) has a density of 0.20 to 0.90 g/cm$^3$.

11. The shoe sole (Z) according to claim 9,
    wherein the shoe sole (Z) has a density of 0.20 to 0.90 g/cm$^3$.

## INTERNATIONAL SEARCH REPORT

International application No.

**PCT/JP2022/040685**

### A. CLASSIFICATION OF SUBJECT MATTER

*C08G 69/40*(2006.01)i; *C08L 77/00*(2006.01)i; *C08L 101/00*(2006.01)i; *C08J 9/04*(2006.01)i; *C08K 3/011*(2018.01)i; *A43B 13/04*(2006.01)i; *A43B 17/14*(2006.01)i

FI: C08G69/40; A43B13/04 A; C08L77/00; C08L101/00; C08K3/011; C08J9/04 101; A43B17/14; C08J9/04 CFG

According to International Patent Classification (IPC) or to both national classification and IPC

### B. FIELDS SEARCHED

Minimum documentation searched (classification system followed by classification symbols)

C08G69/00-69/50; C08L77/00; 101/00; C08J9/04; C08K3/011; A43B1/00-23/30; A43C1/00-19/00; A43D1/00-999/00; B29D35/00-35/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 62-285920 A (MITSUI PETROCHEM IND LTD) 11 December 1987 (1987-12-11)<br>claim 1, p. 2, lower right column, lines 8-13, p. 3, upper left column, lines 8-9, p. 3, lower left column, line 5 to p. 3, lower right column, line 3, p. 5, upper left column, lines 10-15, p. 5, lower left column, line 7 to p. 5, lower right column, line 2, p. 6, upper column, p. 8, upper right column, lines 10-18, table 1, example 1 | 1-7 |
| A | | 8-11 |
| A | JP 2020-506275 A (ARKEMA FRANCE) 27 February 2020 (2020-02-27)<br>entire text | 1-11 |
| A | WO 2011/027703 A1 (UBE INDUSTRIES, LTD) 10 March 2011 (2011-03-10)<br>entire text | 1-11 |
| A | WO 2005/032817 A1 (DAICEL-DEGUSSA LTD) 14 April 2005 (2005-04-14)<br>entire text | 1-11 |
| A | JP 2004-352789 A (UBE INDUSTRIES, LTD) 16 December 2004 (2004-12-16)<br>entire text | 1-11 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/040685**

| Patent document cited in search report | | | Publication date (day/month/year) | Patent family member(s) | | | Publication date (day/month/year) |
|---|---|---|---|---|---|---|---|
| JP | 62-285920 | A | 11 December 1987 | (Family: none) | | | |
| JP | 2020-506275 | A | 27 February 2020 | US | 2019/0382546 | A1 | |
| | | | | entire text | | | |
| | | | | WO | 2018/146426 | A1 | |
| | | | | EP | 3580266 | A1 | |
| | | | | FR | 3062653 | A1 | |
| | | | | CA | 3042756 | A1 | |
| | | | | CN | 110198973 | A | |
| WO | 2011/027703 | A1 | 10 March 2011 | TW | 201121781 | A | |
| WO | 2005/032817 | A1 | 14 April 2005 | JP | 2005-111691 | A | |
| | | | | US | 2007/0122615 | A1 | |
| | | | | entire text | | | |
| | | | | JP | 2005-119207 | A | |
| | | | | JP | 2005-146269 | A | |
| | | | | EP | 1671785 | A1 | |
| | | | | KR | 10-2006-0096006 | A | |
| | | | | CN | 1890097 | A | |
| | | | | TW | 200517465 | A | |
| JP | 2004-352789 | A | 16 December 2004 | US | 2004/0242774 | A1 | |
| | | | | entire text | | | |
| | | | | EP | 1482011 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008093412 A